# EUROPEAN PATENT SPECIFICATION

(11) **EP 2 827 619 B1**
(45) Date of publication and mention of the grant of the patent: **29.08.2018**
(21) Application number: 12871577.8
(22) Date of filing: 15.03.2012
(51) Int. Cl.: H04W 4/02, H04W 4/40, H04W 4/06, G01C 21/26

(54) **MOBILE COMMUNICATION APPARATUS, MANAGEMENT APPARATUS, MOBILE COMMUNICATION METHOD, MOBILE COMMUNICATION PROGRAM, AND RECORDING MEDIUM**
MOBILKOMMUNIKATIONSVORRICHTUNG, VERWALTUNGSVORRICHTUNG, MOBILKOMMUNIKATIONSVERFAHREN, MOBILKOMMUNIKATIONSPROGRAMM UND AUFZEICHNUNGSMEDIUM
DISPOSITIF DE COMMUNICATION MOBILE, DISPOSITIF DE GESTION, PROCÉDÉ DE COMMUNICATION MOBILE, PROGRAMME DE COMMUNICATION MOBILE ET SUPPORT D'ENREGISTREMENT

(43) Date of publication of application: 21.01.2015
(73) Proprietor: Pioneer Corporation, Tokyo 113-0021 (JP)
(72) Inventor: KAKU Fuminobu, Kawagoe-shi Saitama 350-8555 (JP)
(74) Representative: Gill Jennings & Every LLP
(86) International application number: PCT/JP2012/056768
(87) International publication number: WO 2013/136499

(56) References cited:
- JP-A- 2002 530 006
- JP-A- 2008 252 624
- JP-A- 2009 272 951
- JP-A- 2010 237 934
- US-A1- 2007 162 550
- US-A1- 2011 029 611
- US-A1- 2011 145 331

## Description

### TECHNICAL FIELD

The present invention relates to a mobile communication apparatus, a management device, a mobile communication method, a mobile communication program, and a recording medium for the mobile communication apparatus mounted in or carried by a mobile body starting a conversation with an other unspecified mobile communication apparatus.

### BACKGROUND ART

In recent years, along with the improvement of a mobile communication technology, for example, proposed are many technologies to transmit/receive information between mobile communication apparatuses, such as a navigation apparatus mounted in a vehicle and a wireless mobile terminal carried by a pedestrian.

For example, in Patent Literature 1, disclosed is a technology in which a plurality of navigation apparatuses transmit/receive information indirectly through a common server, or directly therebetween in a form of e-mails or chat to thereby communicate with each other.

Patent Literature 2 describes an automobile-to-automobile instant-messaging system that enables a user of a first automobile to selectively send a communicative message to a user of a second automobile, the communicative message being addressed to the second automobile based at least in part upon its location with respect to the first automobile. The message is addressed also based upon the road and/or direction of travel of the second automobile. The system comprises a locative server in wireless communication with processors of each of the first and second automobiles, the locative server repeatedly receiving locative data from each automobile indicating its substantially current geospatial location; and wherein messaging data is sent to the second automobile that originates from the first automobile, the sending of the messaging data being dependent at least in part upon a determined spatial proximity between the first automobile and the second automobile.

Patent Literature 3 describes a device which receives a wireless signal from the peer device and determines the presence of the peer device based on the received signal. The device is able to detect the peer device when the peer device is within the vicinity or a certain proximity of the device. The received signal carries an affinity code of the peer device so that the device can detect the affinity of the peer device by comparing the received affinity code with its preset affinity code. If the two affinity code match, the device generates an the user to the presence of another user and signals that the two users share the same affinity.

### Prior art reference

### Patent Literature

Patent Literature 1: JP, A, 2007-255908
Patent Literature 2: US, A, 2007/162550
Patent Literature 3: US, A, 2011/029611

### DISCLOSURE OF THE INVENTION

### Problem to be solved by the Invention

However, with the above-described prior art, the navigation apparatuses can communicate only with partners known to each other or registered in the server. Meanwhile, has been demanded a communication technology to be able to easily communicate with unknown/unspecified others existing in a geographical range by means of a topic regarding a situation that can be shared in the geographical range where the mobile communication apparatus is located at the time, such as a traffic jam and weather.

A problem to be solved by the present invention includes the above-described problematic point as one example.

### Means for Solving the Problem

In order to achieve the above-described object, there is provided a mobile communication apparatus that is mounted in or carried by a mobile body, and transmits/receives information to/from an other mobile communication apparatus by wireless communication according to claim 1.

In order to achieve the above-described object, there is provided a mobile communication method used for a mobile communication apparatus that is mounted in and carried by a mobile body and that transmits/receives information to/from an other mobile communication apparatus by wireless communication according to claim 5.

In order to achieve the above-described object, according to the invention recited in claim 6, there is provided a mobile communication program for executing the steps of the mobile communication method according to claim 5 on a mobile communication apparatus.

In order to achieve the above-described object, according to the invention recited in claim 7, there is provided a recording medium capable of reading by the mobile communication apparatus, storing the mobile communication program according to claim 6.

### BRIEF DESCRIPTION OF THE DRAWING

Fig. 1 is a perspective diagram showing a configuration example of a vehicle mounting a navigation apparatus, which is an embodiment of a mobile communication apparatus of the present invention.
Fig. 2 is a block diagram showing a hardware configuration example of the navigation apparatus.
Fig. 3 is a diagram showing one example of a geographical range corresponding to a wirelessly communicable range centering on a vehicle.
Fig. 4 is a diagram showing one example of a data configuration of a conversation request packet.
Fig. 5A is an illustration representing a specific input example of each information data included in a conversation request packet.
Fig. 5B is an illustration representing a specific input example of each information data included in a conversation request packet.
Fig. 5C is an illustration representing a specific input example of each information data included in a conversation request packet.
Fig. 6 is one example of a sequence chart showing a transmission/reception situation of packets between vehicles until a conversation is started in a case of the embodiment.
Fig. 7 is one example of a flow chart representing a control content executed by a CPU of a navigation apparatus body of a posing side of conversation start.
Fig. 8 is one example of a flow chart representing a control content executed by a CPU of a navigation apparatus body of an approval side of the conversation start.
Fig. 9 is an illustration representing a specific input example of each information data included in a conversation request packet other than in Figs. 5A-5C.
Fig. 10 is one example of a sequence chart corresponding to Fig. 6 in a case of transmitting a conversation request packet by dividing it into a plurality of stages;
Fig. 11 is a perspective diagram showing a configuration example of the vehicle corresponding to Fig. 1 in a case of holding a conversation through an external server;
Fig. 12 is one example of a sequence chart corresponding to Fig. 6 in a case of holding a conversation through a plurality of servers that deal with conversation types.
Fig. 13 is one example of a sequence chart corresponding to Fig. 6 in a case of specifying a partner designated by a server as a communication object.

### BEST MODE FOR CARRYING OUT THE INVENTION

Hereinafter, one of embodiments of the present invention will be explained with reference to drawings.

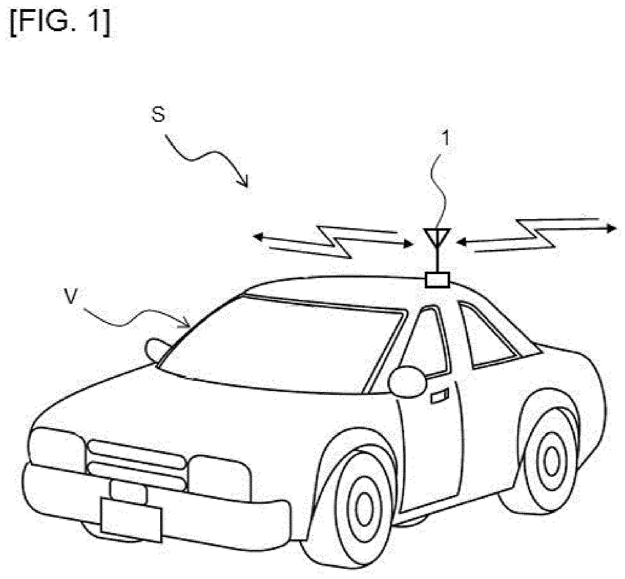

Fig. 1 is a perspective diagram showing a configuration example of a vehicle mounting a navigation apparatus, which is an embodiment of a mobile communication apparatus of the present invention. In this Fig. 1, a navigation apparatus S includes a wireless communication antenna 1 for wirelessly communicating with other vehicles located around a vehicle V, which is a mobile body.

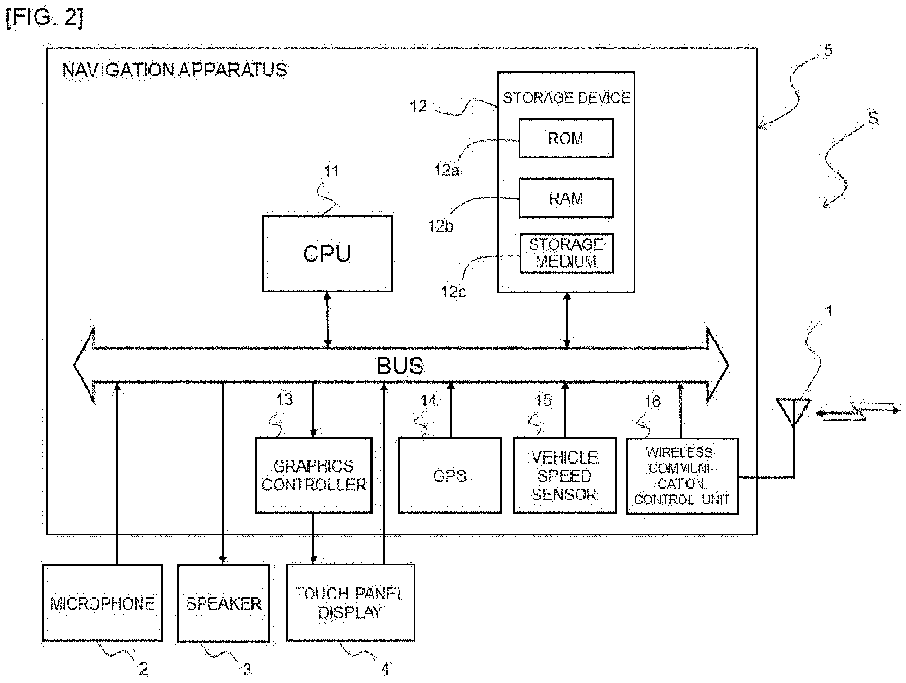

Fig. 2 is one example of a block diagram showing a hardware configuration example of the navigation apparatus S. In this Fig. 2, the navigation apparatus S has: the wireless communication antenna 1; a microphone 2; a speaker 3; a touch panel display 4; and a navigation apparatus body 5.

The wireless communication antenna 1 has a function to transmit to a predetermined wirelessly communicable distance by wireless communication various transmission information input from a wireless communication control unit (mentioned later) of the navigation apparatus body 5, and to receive various reception information from an periphery of the vehicle V by wireless communication to output to the above-described wireless communication control unit.

The microphone 2 has a function to collect voices pronounced by a driver and a fellow passenger of the vehicle V, and to input to the navigation apparatus body 5 as voice information. The speaker 3 has a function to pronounce to the user the voice information output from the navigation apparatus body 5.

The touch panel display 4, for example, includes: an LCD panel; a transparent touch panel disposed on a surface thereof; etc., and has a function to display an image on the above-described LCD panel based on an image signal input from a graphics controller (mentioned later) of the navigation apparatus body 5, and to detect a position on a region of the above-described touch panel with which the user got into touch to input to the navigation apparatus body 5.

The navigation apparatus body 5 has: a CPU 11; a storage device 12; a graphics controller 13; a GPS 14; a vehicle speed sensor 15; and a wireless communication control unit 16.

The CPU 11 has a function to control the whole navigation apparatus S by performing various types of calculations by means of predetermined program operation, also exchanging information between an other each unit, and outputting various types of control instructions.

The storage device 12 has: a ROM 12a; a RAM 12b; and a storage medium 12c. The ROM 12a is an information storage medium in which various types of processing programs and other necessary information have been previously written. The RAM 12b is an information storage medium in which performed are writing and reading of necessary information in executing the above-described various types of programs. The storage medium 12c is a nonvolatile information storage medium, such as a flash memory and a hard disk, in which various types of information, such as vehicle supplementary information and user supplementary information, which will be mentioned later, is previously stored.

The graphics controller 13 has a function to acquire image data from a video RAM (not shown) and the above-described GPS 14, etc. by control of the CPU 11, and to display an image signal based on this image data on the above-described touch panel display 4.

The GPS 14 performs positioning of a current position of the vehicle V, and acquires current position information. Using the acquired information, the navigation apparatus S can acquire information of geographical features, roads, facilities, etc. around the above-described current position based on previously stored map information using the acquired information.

The vehicle speed sensor 15 has a function to detect a traveling speed of the vehicle V. The above-described CPU 11 included in the navigation apparatus body 5 can identify whether or not the vehicle V is in a stopped state, or at what traveling speed the vehicle V is traveling based on a detection signal of the vehicle speed sensor 15.

The wireless communication control unit 16 has a function to control transmission/reception of various types of information by wireless communication through the above-described wireless communication antenna 1. It is to be noted that as a format of wireless communication, various types of formats, such as Wi-Fi (a so-called wireless LAN), DSRC, or a millimeter wave radar, are applicable, and that particularly in transmission, the various types of information can be transmitted to the wirelessly communicable distance corresponding to predetermined antenna power. In addition, a communication address is allocated for each individual navigation apparatus S, and the wireless communication control unit 16 identifies a communication object by means of the communication address to individually transmit/receive information.

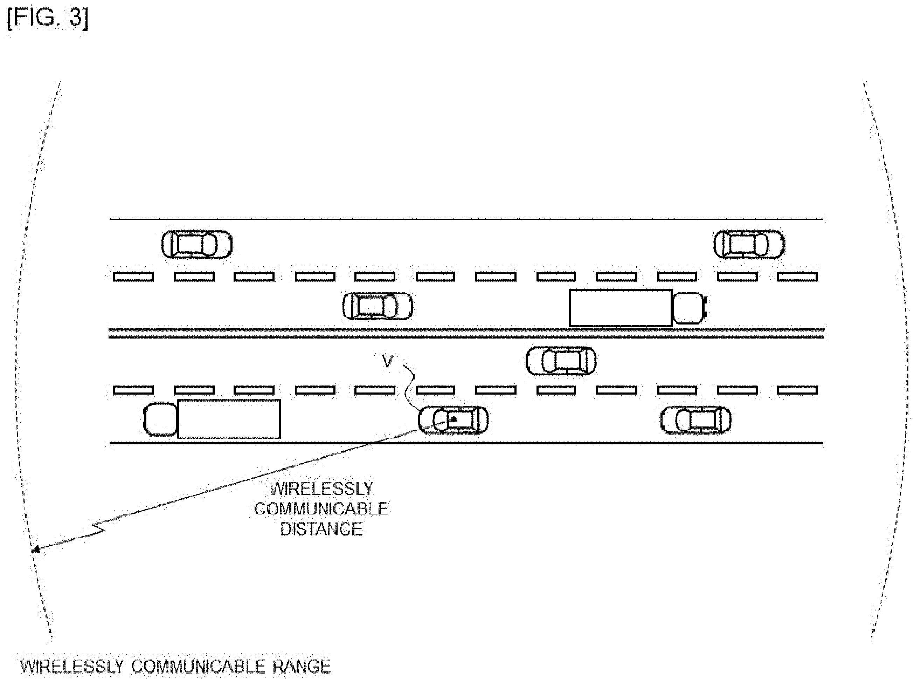

In the navigation apparatus S configured as described above, the wireless communication control unit 16 can, as mentioned above, transmit various transmission information within a predetermined wirelessly communicable range through the wireless communication antenna 1. In a usual case, this wirelessly communicable range is, as shown in an example of Fig. 3, an approximately-circular geographical range in which the above-described wirelessly communicable distance has been set to be a radius centering on the vehicle V. For example, in the wireless communication using the above-mentioned various types of formats, the wirelessly communicable distance is less than 1 km at the longest in many cases. Accordingly, there is a high possibility that the vehicle V shares situations affected by geographical conditions, such as weather, a traffic jam, and presence/absence of available neighboring facilities, with other vehicles existing in the wirelessly communicable range including the current position of the vehicle V. There is a case where those who are sharing the same situation as described above want to communicate even with unfamiliar unknown others using the common situation as a topic. Particularly in the mobile communication apparatus, such as a navigation apparatus mounted in a vehicle, and a mobile phone, since a current position of the mobile communication apparatus itself is always moved and many of other persons existing in a surrounding geographical range are always exchanged, the others who share the same geographical situation are always unknown and unspecified in most cases.

In the navigation apparatus S of the present embodiment, a conversation request packet that designates predetermined conversation setting is transmitted to users of other unspecified vehicles existing in the wirelessly communicable range centering on the current position of the vehicle V through broadcasting, and start of a conversation is posed. A navigation apparatus having an equal function of the other vehicle then receives this conversation request packet, and the user of the navigation apparatus replies a conversation response packet when approving the conversation setting designated by the conversation request packet, whereby the conversation is started. It is to be noted that a conversation held by the present embodiment is assumed to be a conversation in an aspect through text data, such as so-called e-mails and chat.

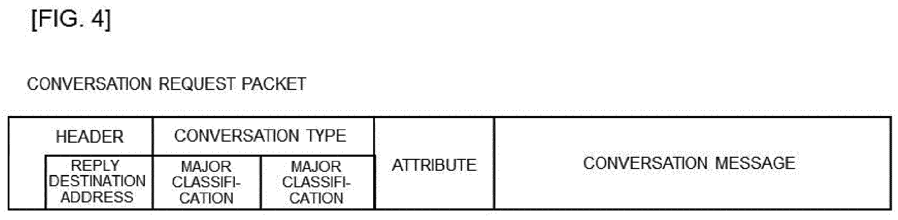

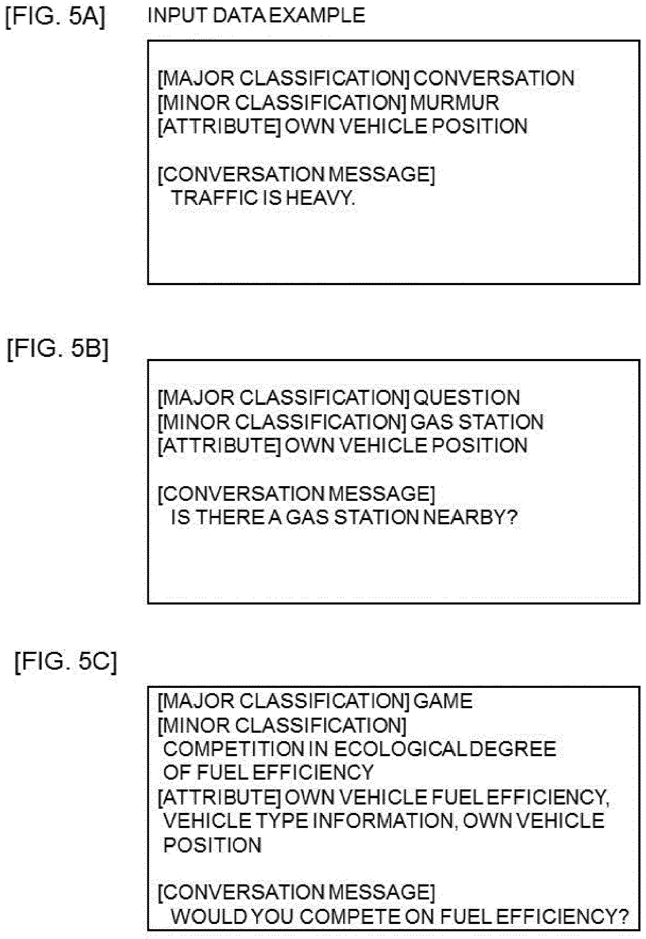

Fig. 4 is a diagram showing one example of a data configuration of the above-described conversation request packet. In this Fig. 4, the conversation request packet has: a header; conversation type information; attribution information; and conversation message information (refer to after-mentioned Figs. 5A-5C for a specific example of each data).

The header is data in which information on transmission/reception of the conversation request packet is described corresponding to the format of the wireless communication, and in this header, included is a communication address of the navigation apparatus S, which is a transmission source of the conversation request packet, i.e., a reply destination address in responding to the conversation request packet.

The conversation type information is data indicating the conversation setting posed by the conversation request packet, and includes information of a major classification and information of a minor classification. The major classification is information indicating a conversation form, such as a way of posing a conversation or what form the conversation is promoted with, and the minor classification is information indicating a specific theme of the conversation to be posed. Each may be selected from a plurality of previously set fixed phrases, or the user may describe arbitrarily.

The attribution information is data regarding the user of the navigation apparatus S, which is the transmission source of the conversation request packet, and the vehicle (vehicle V) mounting the navigation apparatus S, and for example, includes: traveling situation information; the vehicle supplementary information; the user supplementary information; etc. As the traveling situation information, for example, included are: the current position information detected by the GPS 14; a traveling speed at the time; a fuel residual amount; etc. In addition, as the vehicle supplementary information, included are: a vehicle type and a vehicle weight of the vehicle V, and optional functions (an audiovisual function, a path search function, etc.) of the navigation apparatus S. As the user supplementary information, for example, included are: a sex; an age; a movement purpose; etc. As actually transmitted contents of the attribution information among these, contents related to conversation setting of the above-described conversation type information may just be arbitrarily or automatically selected.

The conversation message information is comparatively short text data additionally attached by the user who transmits the conversation request packet in posing the start of a conversation, and the user can freely input a content of the text data, such as a message as a starter for the conversation.

Among the above each data, the header and the conversation type information are data essential for the conversation request packet, and the other attribution information and the conversation message are data arbitrarily added as needed. In addition, also in order to flexibly promote the conversation between users, the conversation setting indicated by the conversation type information and selection of the attribution information should be made indexes to the utmost, and they need not be strictly distinguished. It is to be noted that the above-described conversation request packet corresponds to conversation request information described in each claim.

Figs. 5A-5C are illustrations representing specific input examples of the above-described each information data included in a conversation request packet. In Fig. 5A, a conversation regarding a traffic jam situation is posed, a "conversation" is set for the major classification and a "murmur" is set for the minor classification as an illustrated example, and current position information of the own vehicle detected by the above-described GPS 14 is attached as the attribution information. In an other navigation apparatus that has received the conversation request packet having these data, the major classification, the minor classification, and the conversation message are output, also a current position of the vehicle, which is the transmission source of the conversation request packet, is displayed on a map image, and thereby it can be confirmed whether the vehicle exists on a same roadway as the own vehicle or on a connected roadway, etc.

In Fig. 5B, posed is a question regarding utilization of neighboring facilities, the "question" is set for the major classification and a "gas station" is set for the minor classification as an illustrated example, and the current position information of the own vehicle is attached as the attribution information. In an other navigation apparatus that has received the conversation request packet having these data, the major classification, the minor classification, and the conversation message are output, also a current position of the vehicle, which is the transmission source of the conversation request packet, is displayed on a map image, and thereby it can be confirmed whether or not the user knows a gas station around the current position in detail, etc.

In Fig. 5C, posed is a game to compete on driving evaluation regarding fuel efficiency, the "game" is set for the major classification and a "competition in ecological degree of fuel efficiency" is set for the minor classification as an illustrated example, and a fuel efficiency characteristic, vehicle type information, and current position information of the own vehicle are attached as the attribution information. In the other navigation apparatus that has received the conversation request packet having these data, the major classification, the minor classification, and the conversation message are output, also each attribution information and the current position of the vehicle, which is the transmission source of the conversation request packet, is displayed, and thereby it can be confirmed whether or not the displayed information indicates conditions with which the vehicle as the transmission source can compete on the own vehicle, etc. also including whether or not the vehicle is in a same road situation (an urban area, a mountain area, an installation interval of traffic lights, etc.). It is to be noted that in this case, the conversation is established only between the vehicles that mount the navigation apparatus having a similar fuel efficiency driving evaluation function.

In these examples of the conversation request packets shown in Figs. 5A-5C, the situations that the users can be shared just because they exist in the same geographical range are made into topics, and it can be the starter to hold a conversation even though the users are unknown to each other. Additionally, it becomes easy also for the user who has received the conversation request packet to determine the approval for the posed start of the conversation by referring to the conversation type, an attribution, and the conversation message.

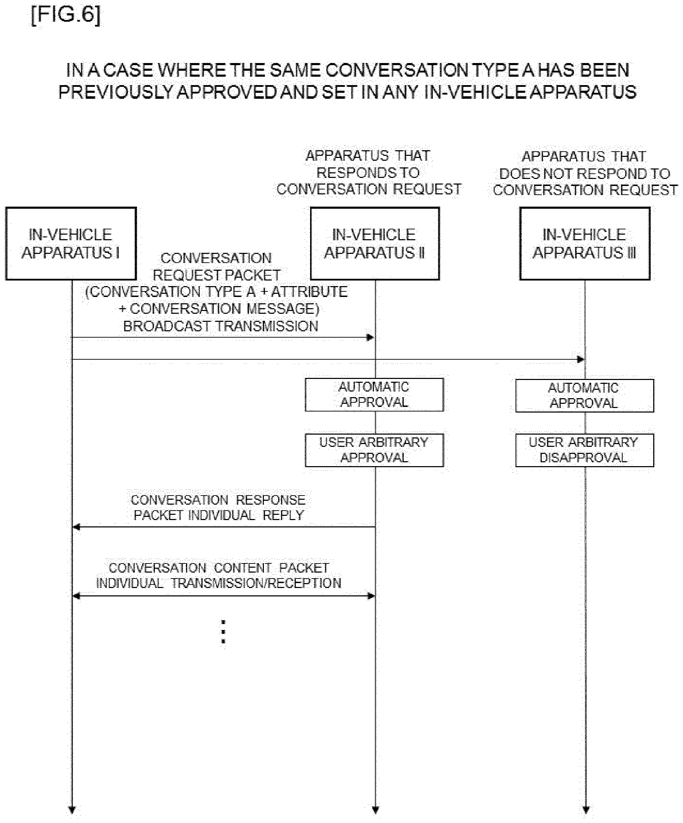

Fig. 6 is one example of a sequence chart showing a transmission/reception situation of packets between vehicles until a conversation is started in a case of the present embodiment. In this Fig. 6, an in-vehicle apparatus I (corresponding to a navigation apparatus, and the same applies hereinafter) first transmits through broadcasting a conversation request packet indicating predetermined conversation setting, and poses the start of the conversation. All the other in-vehicle apparatuses II and III (corresponding to other mobile communication apparatuses, and the same applies hereinafter) existing in a wirelessly communicable range centering on a vehicle mounting the in-vehicle apparatus I directly receive the above-described conversation request packet. Additionally, only when contents of conversation setting (a conversation form of the major classification and a conversation theme of the minor classification) of the conversation type are the contents that each user presets to be able to be approved, the in-vehicle apparatuses II and III output each information data of the conversation request packet to users. It is to be noted that in an illustrated example, shown is a case where in both the in-vehicle apparatuses II and III, the contents of the received conversation setting are preset that they may be approved.

Only when in these in-vehicle apparatuses II and III that have approved automatically, the user thereof arbitrarily approves that the conversation may be held by the conversation setting of the conversation type information, and performs predetermined operation, the in-vehicle apparatus (the in-vehicle apparatus II in the illustrated example) replies a conversation response packet that responds to conversation request of the conversation request packet. That is, in the present embodiment, only after double approval of automatic approval for the conversation setting of the received conversation type by prior setting, and arbitrary approval by determination of the user on that occasion, the conversation response packet is replied. In this case, a conversation response packet with a content corresponding to the conversation request packet is individually replied to a reply destination address included in a header of the received conversation request packet. In addition, a communication address of the navigation apparatus that replied the conversation response packet is included as a reply source address in the header of the conversation response packet (not particularly shown). It is to be noted that this conversation response packet corresponds to conversation response information described in each claim.

The in-vehicle apparatuses I and II specify each other as the communication object in the conversation setting by the above transmission/reception of the packets. After the communication object of the conversation has been specified as described above, the respective communication objects transmit/receive a conversation content packet indicating information of a conversation content to hold the conversation. It is to be noted that this conversation content packet corresponds to conversation content information described in each claim.

Here, in the present embodiment, as mentioned above, each information data included in the conversation request packet, the conversation response packet, and the conversation content packet, respectively is set to be a form of comparatively short text data. When these text data is output to the user, a corresponding character string is displayed on the touch panel display 4, and is read out from the speaker 3 in a corresponding voice form by a voice synthesis function. In addition, also regarding the input, for example, input may be performed by pressing input through a software keyboard (not shown) on the touch panel display 4, or voice pronounced by the user may be detected by the microphone 2 to be converted into text data by a voice recognition function. In addition, also in order to secure traveling safety of the vehicle, an input/output of each information data can be performed for example, only when the vehicle V is being stopped or is in a stable traveling state at a constant low speed without steering.

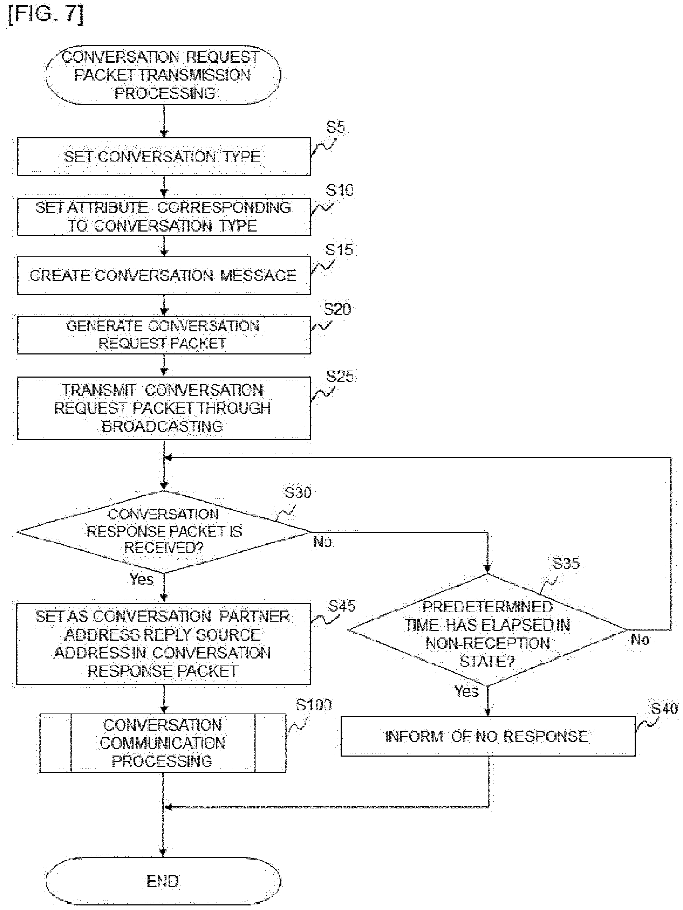

Fig. 7 is one example of a flow chart showing a control content executed by the CPU 11 of the navigation apparatus body 5 in order to achieve a function as a posing side of the start of a conversation among the above-explained operation aspects.

In Fig 7, first, in step S5, set is conversation type information included in a conversation request packet. Specifically, information of the conversation form corresponding to the major classification and information of the conversation theme corresponding to the minor classification are set based on an input content from a user, respectively. In this setting of the conversation type, the setting may be performed by selection from the plurality of fixed phrases preset as mentioned above, or the user may arbitrarily set.

The program moves to step S10, and attribution information is set. Specifically, automatically or arbitrarily by the user, selected is information related to the conversation setting of the conversation type information set in the above-described step S5 among the traveling situation information, the vehicle supplementary information, the user supplementary information, etc., and detection values from the GPS 14 and the vehicle speed sensor 15, and various types of information stored in the storage medium 12c etc. are set as the attribution information. It is to be noted that the user may arbitrarily omit this setting of the attribution information.

The program moves to step S15, and a conversation message is created. Specifically, a comparatively short sentence arbitrarily input by the user is set as the conversation message. It is to be noted that the user may also arbitrarily omit creation of this conversation message. In addition, as for input of each information in the above steps S5-S15, the each information may be input by pressing operation using the software keyboard through the touch panel display 4, or, voice information pronounced and input by the user through the microphone 2 may be converted into text data by voice recognition to be input.

The program moves to step S20, and the conversation request packet is generated. Specifically, in addition to each information input in the above-described steps S5-S15, a communication address allocated to the navigation apparatus S is included in a header as a reply destination address, and generated is the conversation request packet having the data configuration shown in the above-described Fig. 4 .

The program moves to step S25, and the conversation request packet generated in the above-described step S20 is transmitted through broadcasting within a wirelessly communicable range of the wireless communication control unit 16. It is to be noted that a procedure of this step S25 corresponds to request transmission means and a request transmission step described in each claim.

The program moves to step S30, and it is determined whether or not a conversation response packet corresponding to the conversation request packet transmitted in the above-described step S25 has been received by the wireless communication control unit 16. If the corresponding conversation response packet has not been received yet, the determination is not satisfied, and the program moves to step S35. It is to be noted that a procedure of this step S30 corresponds to response reception means described in each claim.

In step S35, it is determined whether or not a predetermined time has elapsed in a state where the determination of no reception of the conversation response packet in the above-described step S30 is continued after transmitting the conversation request packet in the above-described step S25. If the predetermined time has not elapsed in the non-reception state yet, the determination is not satisfied, and the program returns to step S30 to repeat a similar procedure.

Meanwhile, if the predetermined time has elapsed in the non-reception state, the determination is satisfied, and the program moves to step S40.

In step S40, it is determined that has not been received the conversation response packet with respect to the conversation request packet transmitted in the above-described step S25, i.e., it is determined that there is no response to the conversation posed by the user, informing of the no response is performed, and this flow is ended.

In addition, meanwhile, if the conversation response packet corresponding to the conversation request packet is received in the determination of the above-described step S30, the determination is satisfied, and the program moves to step S45.

In step S45, a reply source address included in the received conversation response packet is set as a communication address of a communication object, and a user of a corresponding navigation apparatus is specified as a conversation partner.

The program moves to step S100, and performed is conversation communication processing to transmit/receive a conversation content packet including conversation content information to/from the navigation apparatus having the communication address of the communication object set in the above-described step S45 (detailed description is omitted). This flow is then ended. It is to be noted that a procedure of the above-described step S100 corresponds to conversation means and a conversation step described in each claim.

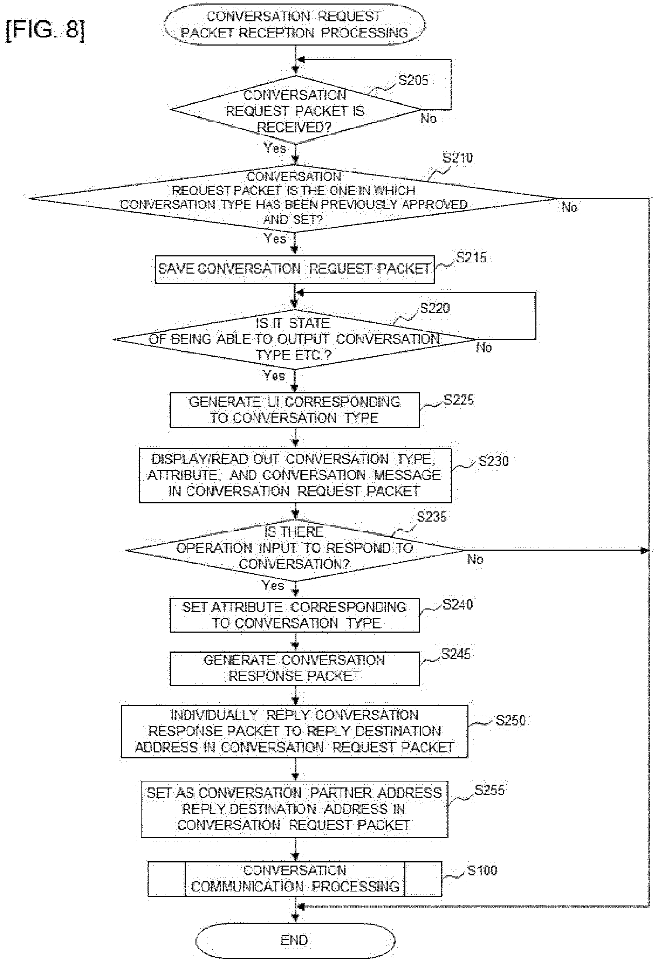

Fig. 8 is one example of a flow chart showing a control content executed by the CPU 11 of the navigation apparatus body 5 in order to achieve a function as an approval and responding side of the posed conversation setting.

In Fig. 8, first, in step S205, the program waits in a loop until determining that the conversation request packet has been received by the wireless communication control unit 16, and if the conversation request packet is received, the program moves to step S210. It is to be noted that a procedure of this step S205 corresponds to request reception means described in each claim.

In step S210, it is determined whether or not the conversation setting of the conversation type included in the conversation request packet received in the above-described step S205 has a content preset to be approved by the user of the navigation apparatus S. Alternatively, if the received conversation type has a content to utilize a predetermined function of the navigation apparatus, determination may be automatically performed based on whether or not the navigation apparatus S corresponds to the function. As a matter of course, as for the setting of prior approval, it may be set so that the user approves conversation setting of any conversation type, and conversely, it may be set so that the user does not approve conversation setting of all the conversation types. If the conversation setting of the received conversation type has a content preset not to be approved, the determination is not satisfied, processing of the received conversation request packet is rejected, and this flow is ended as it is. It is to be noted that a procedure of this step S210 corresponds to rejection means described in each claim.

Meanwhile, if the conversation setting of the received conversation type has a content preset to be approved, the determination is satisfied, and the program moves to step S215.

In step S215, the conversation request packet received in the above-described step S205 is stored in the above-described storage medium 12c.

The program moves to step S220, and it is determined whether a traveling state of the vehicle V that mounts the navigation apparatus S is in a state of being able to output the conversation type information, the attribution information, and the conversation message information. Specifically, it is determined whether or not a traveling speed of the vehicle V detected from the vehicle speed sensor 15 is zero or low, or even high but in a constant stable traveling state, and whether or not the vehicle V can secure traveling safety even though various types of information is output to the user. Furthermore, it may be taken into consideration whether or not the vehicle V is currently being steered based on detection of a steering sensor etc., which is not particularly shown. The program waits in the loop until it is determined that the vehicle V is in the state of being able to output the various types of information, and if it is determined that the vehicle V is in the state of being able to output the various types of information, the program moves to step S225.

In step S225, generated is a user interface (abbreviated as UI in Fig. 8) corresponding to the received conversation type. It is to be noted that generation processing of this user interface may be performed by background processing during the wait in the loop of the above-described step S220.

The program moves to step S230, and contents of the conversation type information, the attribution information, and the conversation message information included in the conversation request packet saved in the above-described step S215 are output based on the user interface generated in the above-described step S225. Specifically, the various types of information of a text data form is respectively displayed on the touch panel display 4 using a character string based on the user interface, or it is read out and output from the speaker 3 by the voice synthesis function. In addition, when current position information of the vehicle transmitted the conversation request packet is included in the attribution information, a position on a map screen corresponding to a current position is also displayed.

The program moves to step S235, and it is determined whether or not there has been an operation input indicating a response to the received conversation request. In other words, it is determined whether or not arbitrary approval for the start of the posed conversation has been received from the user. It is to be noted that also in this input from the user, an input by the pressing operation through the touch panel display 4 may be employed, or an input by the voice recognition through the microphone 2 may be employed. If there has been an operation input indicating no approval of the user for the received conversation type, the determination is not satisfied, and this flow is ended.

Meanwhile, if there has been an operation input indicating approval of the user for the received conversation type, the determination is satisfied, and the program moves to step S240.

In step S240, set is attribution information of the navigation apparatus S side corresponding to the received conversation type. Specifically, automatically or arbitrarily by the user, selected is information related to the conversation setting of the received conversation type information among the traveling situation information, the vehicle supplementary information, the user supplementary information, etc., and detection values from various types of sensors and various types of information stored in the storage medium 12c etc. are set as the attribution information. It is to be noted that the user may also arbitrarily omit this setting of the attribution information.

The program moves to step S245, and the conversation response packet is generated. Specifically, conversation message information for response is also input as needed in addition to the attribution information input in the above-described step S240, a communication address allocated to the navigation apparatus S is included in a header as a reply source address, and the conversation response packet is generated (this data configuration is not particularly shown).

The program moves to step S250, and the conversation response packet generated in the above-described step S245 is individually transmitted to the reply destination address included in the header of the conversation request packet saved in the above-described step S215. It is to be noted that a procedure of this step S250 corresponds to response transmission means described in each claim.

The program moves to step S255, the above-described reply destination address is set as a communication address of a communication object, and a user of a corresponding navigation apparatus is specified as a conversation partner.

The program moves to step S100, and performed is conversation communication processing to transmit/receive the conversation content packet including the conversation content information to/from the navigation apparatus having the communication address of the communication object set in the above-described step S255. This flow is then ended. It is to be noted that a procedure of the above-described step S100 corresponds to the conversation means and the conversation step described in each claim.

As explained above, the navigation apparatus S of the above-described embodiment is the navigation apparatus S (corresponding to a mobile communication apparatus) that is mounted in or carried by a vehicle (corresponding to a mobile body), and transmits/receives information to/from an other navigation apparatus (corresponding to an other mobile communication apparatus) by wireless communication, and the navigation apparatus S has: the procedure (corresponding to the request transmission means) of step S25 to transmit the conversation request packet (corresponding to the conversation request information) including the predetermined conversation type information to the other navigation apparatus that exists in the predetermined geographical range including the current position of the navigation apparatus S; and the procedure (corresponding to the conversation means) of step S100 to transmit the conversation content packet (corresponding to the conversation content information) indicating the content of the conversation to the other navigation apparatus that approves the predetermined conversation type information.

In addition, a mobile communication method executed by the navigation apparatus S of the above-described embodiment is the mobile communication method used for the navigation apparatus S (corresponding to the mobile communication apparatus) that is mounted in or carried by the vehicle (corresponding to the mobile body), and transmits/receives information to/from the other navigation apparatus (corresponding to the other mobile communication apparatus) by wireless communication, and the mobile communication method includes: the procedure (corresponding to the request transmission step) of step S25 to transmit the conversation request packet (corresponding to the conversation request information) including the predetermined conversation type information to the other navigation apparatus that exists in the predetermined geographical range including the current position of the navigation apparatus S; and the procedure (corresponding to the conversation step) of step S100 to transmit the conversation content packet (corresponding to the conversation content information) indicating the content of the conversation to the other navigation apparatus that approves the predetermined conversation type information.

First, in order for persons unknown to each other to start a conversation, it is necessary to confirm that both the posing side of the conversation and the approval side thereof have wills to hold the conversation about a same conversation type. Consequently, according to the present embodiment, a situation that the persons can share just because they exist in the same geographical range is made into a topic, and thereby it can easily be a starter to hold the conversation even though the persons are unknown to each other. Additionally, necessity is high that the user side that first poses the start of the conversation also desires to pose the start of the conversation with a topic regarding such a sharing situation, and it becomes easy also for the user side to which the start of such conversation has been posed to determine the approval for the posed start of the conversation by referring to the conversation setting indicated by the conversation type information. Consequently, even an unknown/unspecified other person can easily be specified as the communication object of the conversation partner. As a result of this, it becomes possible to easily communicate with the unknown/unspecified other person who is in the geographical range.

It is to be noted that application of the present invention is not limited to in-vehicle apparatuses mounted in a vehicle, such as a navigation apparatus, but that the present invention can be applied also to portable apparatuses, such as a mobile phone and a personal digital assistant carried by a pedestrian etc., and that it becomes easy to have communication among these in-vehicle apparatuses and portable apparatuses without distinction thereof.

Furthermore, in addition to the above-mentioned configuration, the procedure of step S25 transmits through broadcasting a conversation request packet including conversation type information indicating conversation setting designated by the user of the navigation apparatus S, and the procedure of step S100 receives from an other navigation apparatus a conversation response packet (corresponding to conversation response information) corresponding to the conversation request packet, and transmits the conversation content packet to the other navigation apparatus that has transmitted the conversation response packet.

When the navigation apparatus S is configured as described above, as the posing side of the start of the conversation, the user can specifically clearly indicate the conversation type indicating the form and the theme of the conversation by means of the conversation request packet. Additionally, the other navigation apparatus that has replied the conversation response packet to respond to the conversation request packet can be just specified as the communication object. In this way, it can be confirmed that both the posing side of the conversation and the approval side thereof have wills to hold the conversation about the same conversation type, and the posing side of the conversation can transmit the conversation content packet to the approval side of the conversation.

Furthermore, in addition to the above-mentioned configuration, the mobile communication method used for the navigation apparatus S has: the procedure (corresponding to the request reception means) of step S205 to receive the conversation request packet transmitted from the other navigation apparatus; and the procedure (corresponding to the response transmission means) of step S250 to transmit the conversation response packet corresponding to the conversation request packet to the other navigation apparatus that has transmitted the conversation request packet when the user of the navigation apparatus S approves the conversation setting indicated by the conversation type information included in the conversation request packet, and the procedure of step S100 transmits the conversation content packet to the other navigation apparatus, which is the transmission destination of the conversation response packet.

When the navigation apparatus S is configured as described above, as the approval side of the start of the conversation, the user can specifically confirm the conversation type indicating the form and the theme of the conversation by means of the conversation request packet. Additionally, when the user of the navigation apparatus S approves the conversation setting of the conversation type, the other navigation apparatus, which is a reply destination of the conversation response packet to respond to the conversation request packet can be specified as the communication object. In this way, it can be confirmed that both the posing side of the conversation and the approval side thereof have wills to hold the conversation about the same conversation type, and the approval side of the conversation can transmit the conversation content packet to the posing side of the conversation.

Furthermore, in addition to the above-mentioned configuration, the navigation apparatus S has the procedure (corresponding to the rejection means) of step S210 to reject processing to the conversation request packet when the conversation setting indicated by the conversation type information included in the conversation request packet is the one preset not to be approved by the user of the navigation apparatus S.

When the navigation apparatus S is configured as described above, even in a situation of receiving a number of conversation request packets with high frequency, the navigation apparatus S outputs only the conversation request packets of the previously approved conversation settings, and the user further carefully selects a conversation request packet therefrom to reply a conversation response packet. For this reason, the user can automatically omit processing to the conversation request packets of the conversation settings that he does not intend to previously approve, and traveling safety of the vehicle can be secured, for example, in a case of the in-vehicle apparatus.

Furthermore, in addition to the above-mentioned configuration, the conversation type information includes the major classification (corresponding to conversation form information) indicating the conversation form, and the minor classification (corresponding to conversation theme information) indicating the theme of the conversation. When the navigation apparatus S is configured as described above, the conversation content intended by the posing side of the conversation start becomes more specific and clearer, and it becomes easy also for the approval side referring to the conversation content to determine whether to respond.

Furthermore, in addition to the above-mentioned configuration, the conversation request packet includes attribution information having a content corresponding to the conversation type information among the attribution information regarding the vehicle or the user of the navigation apparatus S. When the navigation apparatus S is configured as described above, a specific situation of the posing side of the conversation start can be clearly indicated, and it becomes easy also for the approval side referring to the specific situation to determine whether to respond. In addition, attribution information related only to the conversation type can be clearly indicated among a large number of attribution information, and determination by the approving side can be prevented from becoming complicated.

Furthermore, in addition to the above-mentioned configuration, the conversation request packet includes the conversation message information input by the user of the navigation apparatus S. When the navigation apparatus S is configured as described above, a situation and intention of the posing side of the conversation start can be clearly indicated still more specifically, and it becomes easy also for the approval side referring to the situation and the intention to understand an impression of the posing user side and necessity for the conversation, and to determine whether to respond.

Furthermore, in addition to the above-mentioned configuration, the navigation apparatus S has the microphone 2 and the speaker 3 that input/output through the voice each information included in the conversation request packet and the conversation response packet, respectively. When the navigation apparatus S is configured as described above, confirmation and operation of information become easy particularly to the in-vehicle apparatus as the navigation apparatus even in driving the vehicle, and it becomes easy to secure traveling safety.

It is to be noted that although in the present embodiment, each information data of the conversation request packet, the conversation response packet, and the conversation content packet is set to be an aspect of the text data, the present invention is not limited to this. In addition to that, each information data itself may be set to be as it is an aspect of voice information input by the microphone 2, the voice information may be made to be reproduced and pronounced at the time output, or may be made to be displayed on the touch panel display 4 as a character string by means of the voice recognition function as needed.

Furthermore, in addition to the above-mentioned configuration, the navigation apparatus S has the procedure of step S220 to make each information included in the conversation request packet and the conversation response packet, respectively to be output only when the vehicle is in a safe traveling state. When the navigation apparatus S is configured as described above, output of each information is suspended particularly at the time of acceleration and deceleration, and steering that require attention to driving operation, and thus it becomes easy to secure traveling safety of the vehicle. It is to be noted that not only when each information is output to the user, but even when the user inputs each information, an input is accepted only when the vehicle is in the safe traveling state, and thereby further traveling safety can be easily secured.

Furthermore, in addition to the above-mentioned configuration, the navigation apparatus S has the procedure of step S230 to display the current position corresponding to the current position information when the current position information of the communication object is included in the conversation request packet and the conversation response packet. When the navigation apparatus S is configured as described above, a specific geographical situation of a conversation partner, and a positional relation of the partner to a position of the own vehicle or a position of a target facility can be grasped, and determination of the approval side with respect to the posing of the conversation start becomes easy, or the specific geographical situation and the positional relation can be utilized as reference information during the conversation.

Furthermore, in addition to the above-mentioned configuration, the predetermined geographical range is set to be a wirelessly communicable range of the navigation apparatus S. When the navigation apparatus S is configured as described above, an existence range of the communication object that transmits/receives each packet can be set to be the wirelessly communicable range as it is where the each packet can be directly transmitted/received. Additionally, since there is a high possibility that a situation that is affected by geographical conditions, such as weather, a traffic jam, and presence/absence of available neighboring facilities, is shared with other vehicles in a usual wirelessly communicable range, it becomes easy to communicate with unknown/unspecified others.

In addition, radio field intensity in transmitting the packet may be changed according to the conversation type information included in the conversation request packet. For example, when the conversation type is classified into "conversation to an adjacent vehicle", it becomes possible to perform conversation request in a state of limiting to the adjacent vehicle if the packet is output with radio field intensity smaller than usual. In addition, similarly, a communication method in transmitting the packet may be changed according to the conversation type information included in the conversation request packet. For example, when the conversation type is classified into the "conversation to the adjacent vehicle", it becomes possible to perform conversation request in the state of limiting to the adjacent vehicle if the packet is output by a communication method having a narrow communicable range (for example, by changing a wireless LAN system to a Bluetooth (registered trademark) system).

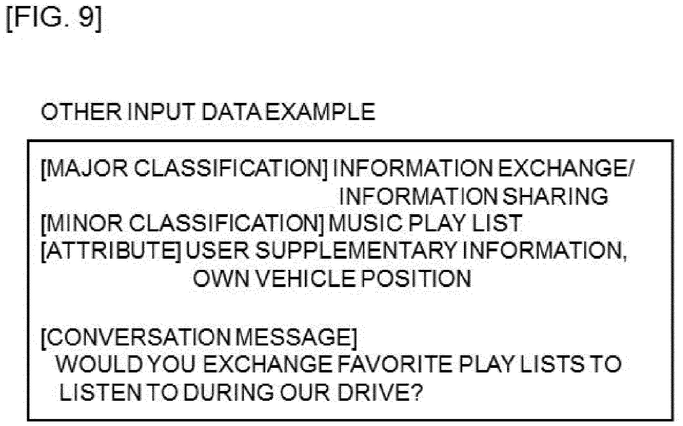

It is to be noted that although only the conversation type information having the contents affected by the geographical conditions has been shown in the examples shown in the above-described Figs. 5A-5C as the conversation type information included in the conversation request packet, the present invention is not limited to this. For example, other topics unrelated to the geographical conditions, such as exchange and sharing of music information as shown in Fig. 9, may be set as the conversation type. Even in this case, for example, as in a case where exchange of common favorite music information can be expected if the user supplementary information is referred to, and the partner is a coeval and has same sex, etc., it is useful to attach attribution information. In addition, also as for the information to be transmitted/received by the conversation content packet etc., may be transmitted/received not only the conversation content information in the aspect of the text data, but data file itself, such as application data as the play list data of the illustrated example, etc. and music data. In addition, when the conversation of the game form shown in the above-described Fig. 5C is hold, results may be saved and accumulated to be referred to as a history later, or may be able to be opened to others through a network. As described above, even though a conversation partner is an unknown/unspecified other person at the start time of the conversation, attribution information is accumulated by repeating the conversation with the same partner after that, which can also be a starter to deepen a friendship.

### (1) First modified example: In a case where a conversation request packet is transmitted by dividing it into a plurality of stages

Although in the above-described embodiment, the posing side of the conversation start transmits the conversation type information, the attribution information, and the conversation message information by collecting them as one conversation request packet, the present invention is not limited to this. In addition to that, a plurality of conversation request packets to which each information data has been distributed may be transmitted in stages.

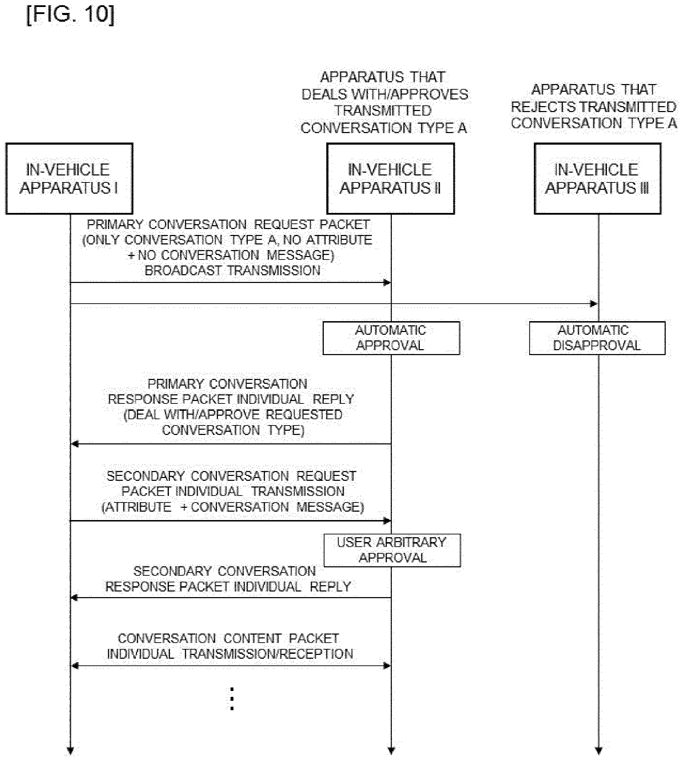

In this first modified example, for example, as shown in a sequence chart of Fig. 10 corresponding to the above-described Fig. 6, a primary conversation request packet including only a conversation type is first transmitted from the in-vehicle apparatus I of the posing side of the conversation start through broadcasting. Each of the in-vehicle apparatuses II and III that have received this primary conversation request packet automatically determines approval or disapproval based on its presetting. Only the in-vehicle apparatus II that has automatically approved individually replies a primary conversation response packet corresponding to the primary conversation request packet. Next, the in-vehicle apparatus I of the posing side that has received this primary conversation response packet individually transmits a secondary conversation request packet including attribution information and conversation message information to a reply source of the primary conversation response packet. When confirming and arbitrarily approving the attribution information and the conversation message information in the in-vehicle apparatus II that has received this secondary conversation request packet, the user individually replies a secondary conversation response packet to the in-vehicle apparatus I, and the in-vehicle apparatus I receives this. Consequently, the in-vehicle apparatuses I and II specify each other as a communication object, and start transmission/reception of a conversation content packet.

Hereinbefore, on the in-vehicle apparatus I side, a procedure to transmit the primary conversation request packet corresponds to primary request transmission means described in each claim, a procedure to receive the primary conversation response packet corresponds to primary response reception means described in each claim, a procedure to transmit the secondary conversation request packet corresponds to secondary request transmission means described in each claim, and a procedure to receive the secondary conversation response packet corresponds to secondary response reception means described in each claim. In addition, on the in-vehicle apparatus II side, a procedure to receive the primary conversation request packet corresponds to primary request reception means described in each claim, a procedure to transmit the primary conversation response packet corresponds to primary response transmission means described in each claim, a procedure to receive the secondary conversation request packet corresponds to secondary request reception means described in each claim, and a procedure to transmit the secondary conversation response packet corresponds to secondary response transmission means described in each claim.

As explained above, as the procedures of the posing side of the conversation start, the navigation apparatus S of the present modified example has: the procedure (corresponding to the primary request transmission means) to transmit through broadcasting the primary conversation request packet including the conversation type information indicating the conversation setting designated by the user of the navigation apparatus S; the procedure (corresponding to the primary response reception means) to receive from an other navigation apparatus the primary conversation response packet corresponding to the primary conversation request packet; the procedure (corresponding to the secondary request transmission means) to transmit to the other navigation apparatus that has transmitted the primary conversation response packet the secondary conversation request packet including at least either of attribution information having a content corresponding to the conversation type information among the attribution information regarding the vehicle or the user of the navigation apparatus S, and the conversation message information input by the user of the navigation apparatus S; and the procedure (corresponding to the secondary response reception means) to receive from the other navigation apparatus that has received the secondary conversation request packet the secondary conversation response packet corresponding to the secondary conversation request packet, and the navigation apparatus S specifies as the communication object the other navigation apparatus that has transmitted the secondary conversation response packet.

When the navigation apparatus S is configured as described above, as the posing side of the start of the conversation, the specific attribution information regarding the posing side and the conversation message information can be first clearly indicated only to a partner who has approved the conversation type indicating the form and the theme of the conversation. Consequently, attribution information having a special circumstance desired not to be known to an unspecified large number of unknown others as much as possible, etc. or detailed intention of conversation posing can be clearly indicated only to the partner who has approved the conversation type, and confidentiality of a conversation content and attribution information can be improved.

Furthermore, in addition to the above-mentioned configuration, as the procedures of the approval side of the conversation start, the navigation apparatus S of the present modified example has: the procedure (corresponding to the primary request reception means) to receive the primary conversation request packet transmitted from the other navigation apparatus; the procedure (corresponding to the primary response transmission means) to transmit the primary conversation response packet corresponding to the primary conversation request packet to the other navigation apparatus that has transmitted the primary conversation request packet when the user of the navigation apparatus S approves the conversation setting indicated by the conversation type information included in the primary conversation request packet; the procedure (corresponding to the secondary request reception means) to receive the secondary conversation request packet transmitted from the other navigation apparatus that has received the primary conversation response packet; and the procedure (corresponding to the secondary response transmission means) to transmit the secondary conversation response packet corresponding to the secondary conversation request packet to the other navigation apparatus that has transmitted the secondary conversation request packet when the user of the navigation apparatus S approves the attribution information and the conversation message included in the secondary conversation request packet, and the navigation apparatus S specifies as the communication object the other navigation apparatus, which is a transmission destination of the secondary conversation response packet.

When the navigation apparatus S is configured as described above, as the approval side of the start of the conversation, the user can first primarily determine the approval only by means of the conversation type indicating the form and the theme of the conversation, and if having approved, the user can confirm the specific attribution information regarding the posing side and the conversation message information. Consequently, for example, in first determination of the approval, the approval can be simply determined without taking into consideration the attribution information and the detailed intention of the conversation posing, and even when a number of conversation request packets are received, narrowing-down thereof can be efficiently performed.

### (2) Second modified example: In a case of holding a conversation through a plurality of servers corresponding to conversation types

Although in the above-described embodiment and the first modified example, the posing side of the conversation start and the approval side thereof directly transmit/receive the conversation content information to/from each other by wireless communication, the present invention is not limited to this. In addition to that, the conversation content information may be transmitted/received through the plurality of servers corresponding to each conversation type.

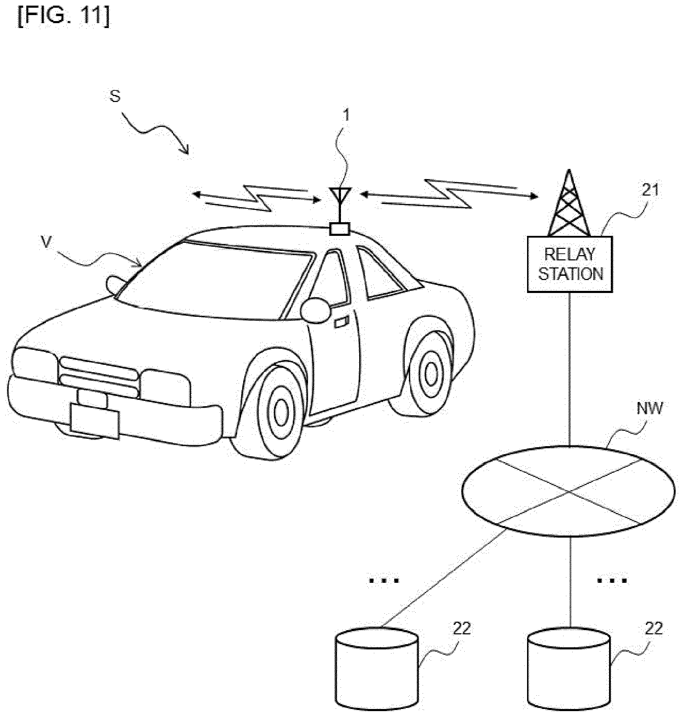

In this second modified example, for example, as shown in Fig. 11 corresponding to the above-described Fig. 1, the navigation apparatus S can communicate with a navigation apparatus of an other vehicle within a wirelessly communicable range, and can access external plurality of servers 22 through a communication network NW via a number of relay stations 21 installed near a roadway. These servers 22 are the servers disposed corresponding to the conversation settings of the conversation type information, respectively, and they are not limited to public servers whose access information (an IP address etc.) is known to a large number of users, but may be servers installed by an individual etc. It is to be noted that these servers correspond to management devices described in each claim.

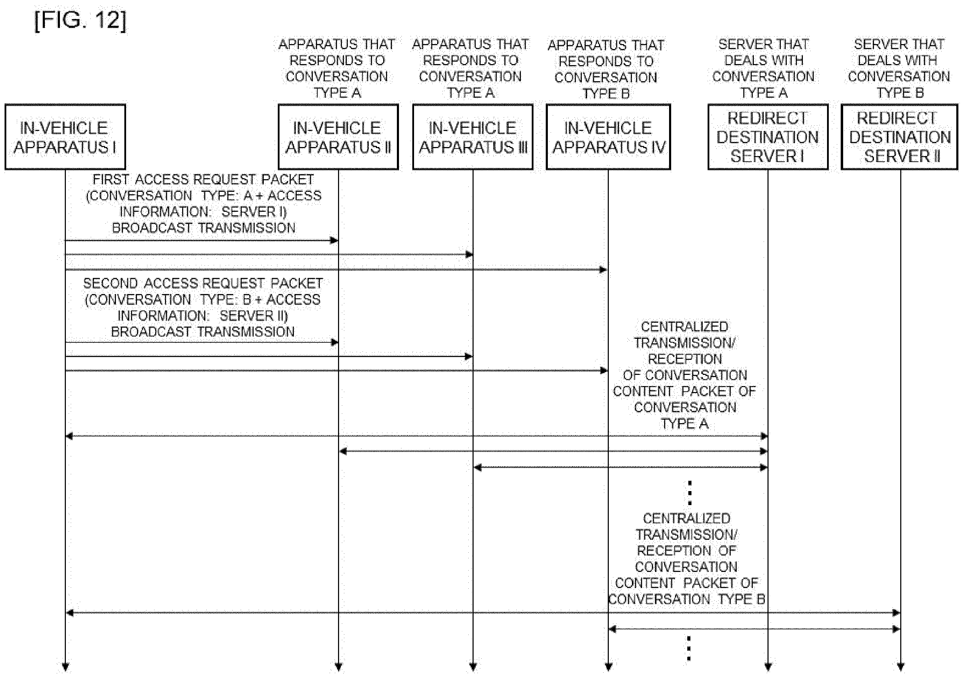

Additionally, for example, as shown in a sequence chart of Fig. 12 corresponding to the above-described Fig. 6, an access request packet including a conversation type and access information to a server, which is a redirect destination corresponding to the conversation type, is first transmitted through broadcasting from the in-vehicle apparatus I of the posing side of the conversation start. In an illustrated example, broadcast transmission of a first access request packet and a second access request packet respectively corresponding to two types of conversation types A and B is performed from the same in-vehicle apparatus I. Access information of a server I corresponding to the conversation type A is included in the first access request packet as the access information of the redirect destination, and access information of a server II corresponding to the conversation type B is included in the second access request packet as the access information of the redirect destination. It is to be noted that each access request packet in this case corresponds to the conversation request information described in each claim.

Each of the in-vehicle apparatuses II, III, and IV that have received these two types of access request packets individually determines approval and disapproval for the respective conversation types of each access request packet by means of automatic determination or user arbitrary determination, respectively. The in-vehicle apparatuses II and III that approve the conversation type A then access the server I of the corresponding redirect destination based on the access information included in the first access request packet. As a result of this, the in-vehicle apparatus I, and the in-vehicle apparatuses II and III specify each other as a communication object in the conversation type A, and transmit/receive a conversation content packet to/from each other through the server I. Meanwhile, the in-vehicle apparatus IV that approves the conversation type B accesses the server II of the corresponding redirect destination based on the access information included in the second access request packet. As a result of this, the in-vehicle apparatus I and the in-vehicle apparatus IV specify each other as a communication object in the conversation type B, and transmit/receive a conversation content packet to/from each other through the server II.

Namely, only the transmission/reception of the access request packet is directly performed between the in-vehicle apparatuses, the in-vehicle apparatus that has received the access request packet accesses the corresponding server, thereby a response of the approval for the conversation posing is replaced by the access, and conversation content information is transmitted/received through the server.

Hereinbefore, on the in-vehicle apparatus I side, a procedure to transmit the first access request packet and the second access request packet corresponds to the request transmission means described in each claim. In addition, on the in-vehicle apparatuses II, III, and IV sides, a procedure to receive the first access request packet and the second access request packet corresponds to the request reception means described in each claim, and a procedure to access the corresponding server based on the access information of each access request packet corresponds to access means described in each claim.

As explained above, in the navigation apparatus S of the present modified example, the access request packet (corresponding to the conversation request information) including the conversation type information indicating the conversation setting designated by the user of the navigation apparatus S, and the access information to a predetermined server (corresponding to the management device) designated as the redirect destination is transmitted through broadcasting (corresponding to the request transmission means), and the procedure of the above-described step S100 transmits the conversation content packet through the predetermined server to an other navigation apparatus that has accessed the predetermined server based on the access information.

When the navigation apparatus S is configured as described above, unknown/unspecified others who have not previously registered are also made to access the server corresponding to the conversation type to be easily specified as communication objects, and for example, even when a temporary communication failure occurs due to passage in a tunnel etc., conversation content information transmitted by a conversation partner can be received from the server without leakage. In addition, it becomes possible to hold a conversation between the plurality of navigation apparatuses that have accessed the server by using the server of the redirect destination.

Furthermore, in addition to the above-mentioned configuration, the navigation apparatus S of the present modified example further has: the procedure (corresponding to the request reception means) to receive the access request packet (corresponding to the conversation request information) transmitted from the other navigation apparatus; and the procedure (corresponding to the access means) to access the predetermined server based on the access information included in the access request packet when the user of the navigation apparatus S approves the conversation setting indicated by the conversation type information included in the access request packet, and the procedure of the above-described step S100 transmits/receives the conversation content packet through the predetermined server to the other navigation apparatus that has accessed the predetermined server.

When the navigation apparatus S is configured as described above, an unregistered server recommended by the unknown/unspecified others is easily accessed to specify the others as communication objects, and for example, even when a temporary communication failure occurs, conversation content information transmitted by a conversation partner can be received from the server without leakage.

### (3) Third modified example: In a case of specifying a partner designated by a server as a communication object

Although in the above-described embodiment and the first and second modified examples, the communication object is specified based on the conversation type directly transmitted/received through the wireless communication between the navigation apparatuses, the present invention is not limited to this. In addition to that, all the navigation apparatuses may access a common central sever, and an other navigation apparatus designated from the central sever may be specified as a communication object.

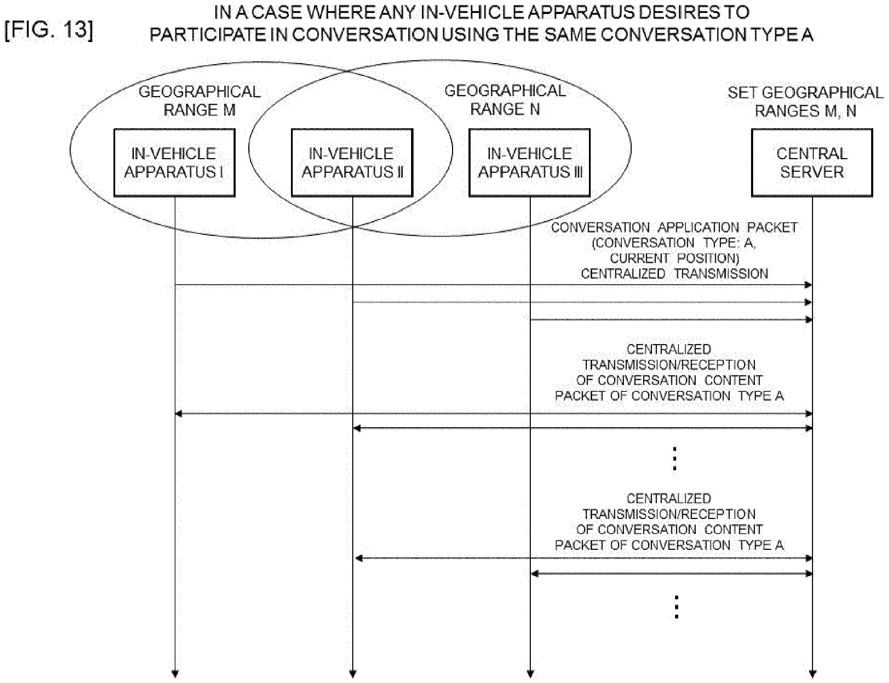

In this third modified example, there is no concept of positions of the posing side of the conversation start and the approval side thereof, and all the navigation apparatuses equally serve as positions to apply participation in a conversation to the common central sever. For example, as shown in a sequence chart of Fig. 13 corresponding to the above-described Fig. 6, all the in-vehicle apparatuses I, II, and III access the common central sever since they desire to participate in the conversation of the same conversation type A, and all of them transmit a conversation application packet including the conversation type information A in a centralized manner. It is to be noted that this conversation application packet is transmitted in a state of also including the current position information acquired by the respective GPSs 14. It is to be noted that the central server corresponds to the management device described in each claim. In addition, the conversation application packet corresponds to the conversation request information described in each claim. In addition, the GPS 14 corresponds to acquisition means described in each claim.

Additionally, the central sever that has received these plurality of conversation application packets collates the respective current position information with each other, and designates as mutual communication objects, respectively the navigation apparatuses that exist in a predetermined geographical range and further, whose conversation settings of the conversation type coincide with each other. In an illustrated example, since the in-vehicle apparatus I and the in-vehicle apparatus II that exist in a same geographical range M are mutually designated as communication objects, and the in-vehicle apparatus II and the in-vehicle apparatus III exist in an other geographical range N that overlaps with the geographical range M at a current position of the in-vehicle apparatus II, they are mutually designated as the communication objects. As a result of this, even when all the in-vehicle apparatuses I, II, and III desire to participate in the conversation of the conversation type A, the in-vehicle apparatuses I, II, and III mutually specify as the communication objects in each of a combination of the in-vehicle apparatuses I and II, and a combination of the in-vehicle apparatuses II and III, and the conversation content packet is transmitted/received only between the communication objects through the central sever.

Namely, direct transmission/reception (so-called vehicle-to-vehicle communication) of the packet between the in-vehicle apparatuses is not performed at all, and completely only transmission/reception (so-called roadway-to-vehicle communication) of the packet through the common central server is performed. It is to be noted that in the present modified example, setting of a geographical range is not limited to a physically-based geographical range as a wirelessly communicable range, but that it can be arbitrarily set by the central sever. For example, the geographical range may be set by a shape or a space unrelated to the wirelessly communicable distance, or may be the one based on an other basis, such as an administrative district, or may be set variably according to the content of the conversation setting of the conversation type.

Hereinbefore, the procedure to transmit the conversation application packet to the central sever in each of the in-vehicle apparatuses I, II, and III corresponds to the request transmission means described in each claim. In addition, in the central sever, a procedure to receive the conversation application packet corresponds to the request reception means described in each claim, and a procedure to designate each communication object of each of the in-vehicle apparatuses I, II, and III, and to transmit the conversation content packet corresponds to content transmission means described in each claim. In addition, each combination of the two in-vehicle apparatuses I and II or the two in-vehicle apparatuses II and III among the respective in-vehicle apparatuses I, II, and III corresponds to a combination of a first mobile communication apparatus and a second mobile communication apparatus described in each claim.

As explained above, the navigation apparatus S further has the GPS 14 (corresponding to the acquisition means) that acquires the current position information of the navigation apparatus S, and transmits (corresponding to the request transmission means) to the predetermined central sever (corresponding to the management device) the conversation application packet (corresponding to the conversation request information) including the conversation type information indicating the conversation setting designated by the user of the navigation apparatus S, and the acquired current position information, and the procedure of the above-described step S100 transmits the conversation content packet through the predetermined central server to the other navigation apparatus designated by the predetermined central server.

When the navigation apparatus S is configured as described above, the communication object of the conversation partner according to the desired conversation type can be automatically designated and specified only by each navigation apparatus transmitting the conversation application packet without the respective users determining the approval. In addition, further grouping may be performed, for example, in accordance with a vehicle type, a traveling roadway, or an age by collating the attribution information. In addition, the central sever collates the geographical range, the conversation type, and the attribution information to perform only retrieval and listing of the corresponding communication object candidates, and the user may eventually select and specify the communication object.

In addition, the central sever of the present modified example is the central sever (corresponding to the management device) that transmits/receives information to/from the navigation apparatus S (corresponding to the mobile communication apparatus) that is mounted in or carried by the vehicle (corresponding to the mobile body), and the central sever has: a procedure (corresponding to the request reception means) to receive from a first navigation apparatus a conversation application packet (corresponding to conversation request information) including a current position of the first navigation apparatus and predetermined conversation type information; and a procedure (corresponding to content transmission means) to transmit a conversation content packet (corresponding to conversation content information) received from the first navigation apparatus to a second navigation apparatus that approves the acquired conversation type information among navigation apparatuses different from the first navigation apparatus that exist in a predetermined geographical range including the position of the received current position information.

Although in the present invention, the geographical range is used as one basis of association of the plurality of navigation apparatuses that are mutually specified as the communication objects, this geographical range can be arbitrarily set without using a physical limitation of the wirelessly communicable range according to the central sever of the present modified example.

In addition, in addition to the above, techniques by the above-described embodiment and each modified example may be appropriately combined and utilized.

### Reference Signs List

- 1: wireless communication antenna
- 2: microphone
- 3: speaker
- 4: touch panel display
- 5: navigation apparatus body
- 11: CPU
- 12: storage device
- 13: graphics controller
- 14: GPS (corresponding to acquisition means)
- 15: vehicle speed sensor
- 16: wireless communication control unit
- 21: relay station
- 22: server (corresponding to management device)
- S: navigation apparatus (corresponding to mobile communication apparatus)
- V: vehicle

## Claims

1. A mobile communication apparatus (S) that is mounted in or carried by a mobile body (V), and transmits/receives information to/from an other mobile communication apparatus (S) by wireless communication, wherein:
the mobile communication apparatus (S) comprises:
request transmission means configured to transmit conversation request information including predetermined conversation type information to the other mobile communication apparatus (S) that exists in a predetermined geographical range including a current position of the mobile communication apparatus (S); and
conversation means configured to transmit conversation content information indicating a content of a conversation to the other mobile communication apparatus (S) that approves said predetermined conversation type information, wherein
said request transmission means transmits through broadcasting the conversation request information including the conversation type information indicating a conversation setting designated by a user of the mobile communication apparatus (S), wherein the apparatus is **characterized in that** the request transmission means transmits access information to a predetermined management device (22) designated as a redirect destination corresponding to the conversation type information, and
said conversation means is configured to transmit the conversation content information through said predetermined management device (22), after the other mobile communication apparatus (S) has approved the conversation request information.

2. The mobile communication apparatus (S) according to claim 1, wherein
said conversation means transmits said conversation content information through said predetermined management device (22) to the other mobile communication apparatus (S) that has accessed said predetermined management device (22) based on said access information.

3. The mobile communication apparatus (S) according to claim 1 or 2, further comprising:
the request reception means configured to receive said conversation request information transmitted from the other mobile communication apparatus (S); and
access means configured to access the predetermined management device (22) based on access information included in said conversation request information when the user of the mobile communication apparatus (S) approves the conversation setting indicated by the conversation type information included in said conversation request information, wherein
said conversation means transmits/receives said conversation content information through said predetermined management device (22) to the other mobile communication apparatus (S) that has accessed said predetermined management device (22).

4. The mobile communication apparatus (S) according to claim 1, further comprising
acquisition means (14) configured to acquire current position information of the mobile communication apparatus (S), wherein
said request transmission means transmits to the predetermined management device (22) the conversation request information including the conversation type information indicating the conversation setting designated by the user of the mobile communication apparatus (S), and said acquired current position information, and
said conversation means transmits said conversation content information through said predetermined management device (22) to the other mobile communication apparatus (S) designated by said predetermined management device (22).

5. A mobile communication method used for a mobile communication apparatus (S) that is mounted in and carried by a mobile body (V) and that transmits/receives information to/from an other mobile communication apparatus (S) by wireless communication, hwherein:
the mobile communication method comprises the steps of:
a request transmission step for transmitting conversation request information including predetermined conversation type information to the other mobile communication apparatus (S) that exists in a predetermined geographical range including a current position of the mobile communication apparatus (S); and
a conversation step for transmitting conversation content information indicating a content of a conversation to the other mobile communication apparatus (S) that approves said predetermined conversation type information, wherein
in said request transmission step,
through broadcasting transmitted is the conversation request information including the conversation type information indicating conversation setting designated by a user of the mobile communication apparatus (S), and **characterized by** transmitting access information to a predetermined management device (22) designated as a redirect destination corresponding to the conversation type information, and,
in said conversation step,
the conversation content information is transmitted through said management device (22), after the other mobile communication apparatus (S) has approved the conversation request information.

6. A mobile communication program causing a mobile communication apparatus (S) to execute the mobile communication method according to claim 5.

7. A recording medium (12a), wherein the mobile communication program according to claim 6 is stored readably by said mobile communication apparatus (S).

## Patentansprüche

1. Mobile Kommunikationsvorrichtung (S), die in einem mobilen Körper (V) gelagert ist oder davon getragen wird und über Drahtloskommunikation Informationen an eine andere mobile Kommunikationsvorrichtung (S) übermittelt oder von dieser empfängt, wobei:
die mobile Kommunikationsvorrichtung (S) Folgendes umfasst:
ein Anforderungsübermittlungsmittel, konfiguriert zum Übermitteln von Konversationsanforderungsinformationen, einschließlich vorgegebener Konversationsartinformationen, an die andere mobile Kommunikationsvorrichtung (S), die in einer vorgegebenen geografischen Reichweite vorliegt, einschließlich einer gegenwärtigen Position der mobilen Kommunikationsvorrichtung (S); und
ein Konversationsmittel, konfiguriert zum Übermitteln von Konversationsinhaltsinformationen, die einen Inhalt einer Konversation anzeigen, an die andere mobile Kommunikationsvorrichtung (S), die die vorgegebenen Konversationsartinformationen bestätigt, wobei
das Anforderungsübermittlungsmittel die Konversationsanforderungsinformationen einschließlich der Konversationsartinformationen durch Übertragen übermittelt, eine Konversationseinstellung anzeigend, die von einem Benutzer der mobilen Kommunikationsvorrichtung (S) festgelegt worden ist, wobei die Vorrichtung **dadurch gekennzeichnet ist, dass** das Anforderungsübermittlungsmittel Zugangsinformationen an eine vorgegebene Verwaltungseinrichtung (22) übermittelt, die entsprechend der Konversationsartinformationen als ein Umleitungsziel festgelegt ist, und
das Konversationsmittel konfiguriert ist, die Konversationsinhaltsinformationen durch die vorgegebene Verwaltungseinrichtung (22) zu übermitteln, nachdem die andere mobile Kommunikationsvorrichtung (S) die Konversationsanforderungsinformationen bestätigt hat.

2. Mobile Kommunikationsvorrichtung (S) nach Anspruch 1, wobei
das Konversationsmittel die Konversationsinhaltsinformationen durch die vorgegebene Verwaltungseinrichtung (22) an die andere mobile Kommunikationsvorrichtung (S) übermittelt, die auf der Grundlage der Zugangsinformationen auf die vorgegebene Verwaltungseinrichtung (22) zugegriffen hat.

3. Mobile Kommunikationsvorrichtung (S) nach Anspruch 1 oder 2, ferner Folgendes umfassend:
das Anforderungsempfangsmittel, konfiguriert zum Empfangen der von der anderen mobilen Kommunikationsvorrichtung (S) übermittelten Konversationsanforderungsinformationen; und
Zugangsmittel, konfiguriert zum Zugreifen auf die vorgegebene Verwaltungseinrichtung (22) auf der Grundlage von Zugangsinformationen, die in den Konversationsanforderungsinformationen enthalten sind, wenn der Benutzer der mobilen Kommunikationsvorrichtung (S) die durch die in den Konversationsanforderungsinformationen enthaltenen Konversationsartinformationen angezeigten Konversationseinstellungen bestätigt, wobei
das Konversationsmittel die Konversationsinhaltsinformationen durch die vorgegebene Verwaltungseinrichtung (22) an die andere mobile Kommunikationsvorrichtung (S), die auf die vorgegebene Verwaltungseinrichtung (22) zugegriffen hat, übermittelt/empfängt.

4. Mobile Kommunikationsvorrichtung (S) nach Anspruch 1, ferner Folgendes umfassend:
Erfassungsmittel (14), konfiguriert zum Erfassen von gegenwärtigen Standortinformationen der mobilen Kommunikationsvorrichtung (S), wobei
das Anforderungsübermittlungsmittel die Konversationsanforderungsinformationen einschließlich der Konversationsartinformationen, die die von dem Benutzer der mobilen Kommunikationsvorrichtung (S) festgelegte Konversationseinstellung anzeigen, und die gegenwärtigen Standortinformationen an die vorgegebene Verwaltungseinrichtung (22) übermittelt, und
das Konversationsmittel die Konversationsinhaltsinformationen durch die vorgegebene Verwaltungseinrichtung (22) an die von der vorgegebenen Verwaltungseinrichtung (22) festgelegte andere mobile Kommunikationsvorrichtung (S) übermittelt.

5. Mobiles Kommunikationsverfahren für eine mobile Kommunikationsvorrichtung (S), die in einem mobilen Körper (V) gelagert ist und davon getragen wird, und über Drahtloskommunikation Informationen an eine andere mobile Kommunikationsvorrichtung (S) übermittelt oder von dieser empfängt, wobei:
das mobile Kommunikationsverfahren die folgenden Schritte umfasst:
einen Anforderungsübermittlungsschritt zum Übermitteln von Konversationsanforderungsinformationen, einschließlich vorgegebener Konversationsartinformationen, an die andere mobile Kommunikationsvorrichtung (S), die in einer vorgegebenen geografischen Reichweite vorliegt, einschließlich einer gegenwärtigen Position der mobilen Kommunikationsvorrichtung (S); und
einen Konversationsschritt zum Übermitteln von Konversationsinhaltsinformationen, die einen Inhalt einer Konversation anzeigen, an die andere mobile Kommunikationsvorrichtung (S), die die vorgegebenen Konversationsartinformationen bestätigt, wobei
in dem Anforderungsübermittlungsschritt,
die Konversationsanforderungsinformationen einschließlich der Konversationsartinformationen durch Übertragen übermittelt werden, die Konversationseinstellung anzeigend, die von einem Benutzer der mobilen Kommunikationsvorrichtung (S) festgelegt ist, und **gekennzeichnet durch** das Übermitteln von Zugangsinformationen an eine vorgegebenen Verwaltungseinrichtung (22), die entsprechend der Konversationsartinformationen als ein Umleitungsziel festgelegt ist, und,
in dem Konversationsschritt,
die Konversationsinhaltsinformationen durch die vorgegebene Verwaltungseinrichtung (22) übermittelt werden, nachdem die andere mobile Kommunikationsvorrichtung (S) die Konversationsanforderungsinformationen bestätigt hat.

6. Mobiles Kommunikationsprogramm, das bewirkt, dass eine mobile Kommunikationsvorrichtung (S) das mobile Kommunikationsverfahren nach Anspruch 5 ausführt.

7. Aufzeichnungsmedium (12a), auf dem das mobile Kommunikationsprogramm nach Anspruch 6 für die mobile Kommunikationsvorrichtung (S) lesbar gespeichert ist.

## Revendications

1. Appareil de communication mobile (S) qui est monté dans ou porté par un corps mobile (V), et transmet/reçoit des informations à/depuis un autre appareil de communication mobile (S) par communication sans fil, dans lequel :
l'appareil de communication mobile (S) comprend :
un moyen de transmission de demande configuré pour transmettre des informations de demande de conversation incluant des informations de type de conversation prédéterminées à l'autre appareil de communication mobile (S) qui existe dans une portée géographique prédéterminée incluant une position actuelle de l'appareil de communication mobile (S) ; et
un moyen de conversation configuré pour transmettre des informations de contenu de conversation indiquant un contenu d'une conversation à l'autre appareil de communication mobile (S) qui approuve lesdites informations de type de conversation prédéterminées, dans lequel
ledit moyen de transmission de demande transmet par radiodiffusion les informations de demande de conversation incluant les informations de type de conversation indiquant un réglage de conversation désigné par un utilisateur de l'appareil de communication mobile (S), dans lequel l'appareil est **caractérisé en ce que** le moyen de transmission de demande transmet des informations d'accès à un dispositif de gestion prédéterminé (22) désigné comme une destination de redirection correspondant aux informations de type de conversation, et
ledit moyen de conversation est configuré pour transmettre les informations de contenu de conversation par le biais dudit dispositif de gestion prédéterminé (22), après que l'autre appareil de communication mobile (S) a approuvé les informations de demande de conversation.

2. Appareil de communication mobile (S) selon la revendication 1, dans lequel ledit moyen de conversation transmet lesdites informations de contenu de conversation par le biais dudit dispositif de gestion prédéterminé (22) à l'autre appareil de communication mobile (S) qui a accédé audit dispositif de gestion prédéterminé (22) d'après lesdites informations d'accès.

3. Appareil de communication mobile (S) selon la revendication 1 ou 2, comprenant en outre :
le moyen de réception de demande configuré pour recevoir lesdites informations de demande de conversation transmises par l'autre appareil de communication mobile (S) ; et
un moyen d'accès configuré pour accéder au dispositif de gestion prédéterminé (22) d'après des informations d'accès incluses dans lesdites informations de demande de conversation lorsque l'utilisateur de l'appareil de communication mobile (S) approuve le réglage de conversation indiqué par les informations de type de conversation incluses dans lesdites informations de demande de conversation, dans lequel
ledit moyen de conversation transmet/reçoit lesdites informations de contenu de conversation par le biais dudit dispositif de gestion prédéterminé (22) à/depuis l'autre appareil de communication mobile (S) qui a accédé audit dispositif de gestion prédéterminé (22).

4. Appareil de communication mobile (S) selon la revendication 1, comprenant en outre un moyen d'acquisition (14) configuré pour acquérir des informations de position actuelle de l'appareil de communication mobile (S), dans lequel
ledit moyen de transmission de demande transmet au dispositif de gestion prédéterminé (22) les informations de demande de conversation incluant les informations de type de conversation indiquant le réglage de conversation désigné par l'utilisateur de l'appareil de communication mobile (S) et lesdites informations de position actuelle acquises, et
ledit moyen de conversation transmet lesdites informations de contenu de conversation par le biais dudit dispositif de gestion prédéterminé (22) à l'autre appareil de communication mobile (S) désigné par ledit dispositif de gestion prédéterminé (22).

5. Procédé de communication mobile utilisé pour un appareil de communication mobile (S) qui est monté dans et porté par un corps mobile (V) et qui transmet/reçoit des informations à/depuis un autre appareil de communication mobile (S) par communication sans fil, dans lequel :
le procédé de communication mobile comprend les étapes suivantes :
une étape de transmission de demande pour transmettre des informations de demande de conversation incluant des informations de type de conversation prédéterminées à l'autre appareil de communication mobile (S) qui existe dans une portée géographique prédéterminée incluant une position actuelle de l'appareil de communication mobile (S) ; et
une étape de conversation pour transmettre des informations de contenu de conversation indiquant un contenu d'une conversation à l'autre appareil de communication mobile (S) qui approuve lesdites informations de type de conversation prédéterminées, dans lequel dans ladite étape de transmission de demande,
par radiodiffusion, les informations de demande de conversation sont transmises incluant les informations de type de conversation indiquant un réglage de conversation désigné par un utilisateur de l'appareil de communication mobile (S), et **caractérisé par** la transmission d'informations d'accès à un dispositif de gestion prédéterminé (22) désigné comme une destination de redirection correspondant aux informations de type de conversation, et,
dans ladite étape de conversation,
les informations de contenu de conversation sont transmises par le biais dudit dispositif de gestion (22), après que l'autre appareil de communication mobile (S) a approuvé les informations de demande de conversation.

6. Programme de communication mobile amenant un appareil de communication mobile (S) à exécuter le procédé de communication mobile selon la revendication 5.

7. Support d'enregistrement (12a), dans lequel le programme de communication mobile selon la revendication 6 est stocké de façon lisible par ledit appareil de communication mobile (S).
